# EUROPEAN PATENT APPLICATION

(11) **EP 2 048 482 A1**
(43) Date of publication of application: **15.04.2009**
(21) Application number: 08104363.0
(22) Date of filing: 11.06.2008
(51) Int. Cl.: G01F 15/06, G01D 4/00

(54) **Consumption meter with wireless power interface**

(71) Applicant: KAMSTRUP A/S, 8660 Skanderborg (DK)
(72) Inventor: Laursen, Peter Schmidt, 8660 Skanderborg (DK); Drachmann, Jens, 8260 Viby J (DK)
(74) Representative: Plougmann & Vingtoft A/S

(57) **Abstract**

A consumption meter arranged to measure a consumed quantity of a physical entity (PE). The meter includes a measurement circuit (M) and a calculator circuit (CA) arranged to calculate data representing the consumed quantity (Q) based on data from the measurement circuit (M). The measurement circuit (M) and the calculator circuit (CA) are powered via a galvanic connection to a first energy source (ES1, BATT) e.g. an internal battery. The meter further includes a power interface (PI, SC, RFID) arranged to generate electric power to at least one power consuming component (DISP, RFT, OIF) of the consumption meter based on energy received via a wireless connection to a second energy source (ES2, H). E.g. the power interface includes a solar cell to generate power based on light. Other possible power interfaces are arranged to generate power based on incoming signals such as capacitive, inductive, acoustic, vibration, electromagnetic Radio Frequency signals etc. E.g. the at least one power consuming component (DISP, RFT, OIF) powered by the power interface may be a display (DISP), a communication module (RFT), and an optical interface (OIF) of the meter.

## Description

### Field of the invention

The invention relates to the field of consumption meters, such as electric meter, heat meter, cooling meters, water meters, and gas meters. Especially, the invention defines a consumption meter suited for receiving a wireless power signal from an external energy source and for powering one or more power consuming components based thereon.

### Background of the invention

Modern electrically powered consumption meters such as electric meters, heat meters, cooling meters, water meters, and gas meters, are typically equipped with a number of power consuming components apart from the circuits that are vital for the metering function. Such extra components can be: a display for manual reading of the meter, a rather power consuming radio module for remote reading capabilities, and a programming interface etc. At the same time it is desired that a consumption meter can operate more than 10 years, e.g. 16-17 years, powered by a small battery without the need for replacing the battery.

### Summary of the invention

Thus, according to the above explanation, it is an object of the present invention to provide a consumption meter with many facilities that at the same time can operate reliably for a long period of time without the need for a service person to visit the consumer who has the consumption meter installed.

The invention provides a consumption meter arranged to measure a consumed quantity of a physical entity, the meter including
- a measurement circuit arranged to perform a physical measurement on the physical entity and to generate data according thereto,
- a calculator circuit arranged to calculate data representing the consumed quantity based on data from the measurement circuit,
wherein the measurement circuit and the calculator circuit are arranged for receiving power via a galvanic connection to a first energy source, and
- a power interface arranged to generate electric power to at least one power consuming component of the consumption meter based on energy received via a wireless connection to a second energy source.

Such meter is suited to provide several power consuming components apart from the vital meter circuits and still without the first energy source, e.g. an internal battery, having to deliver the power. With a power interface that can power extra components in the meter based on energy received via a wireless connection to a second energy source, such energy source can be external to the meter and thus will not take up space within a casing of the meter. Further, as will be described later, several components of a consumption meter can function satisfactory even without any continuously available power source. Thus, by utilizing power from an external source, the consumption meter can provide several functionalities and still be powered by a relatively small battery which is capable of powering the vital metering functions for a long period of time.

In case of an electric meter, the measurement circuit and the calculator circuit are powered, during normal operation, by a wired connection to a power supply arranged to transform the voltage at the electricity network to a lower voltage suitable for powering the measurement and calculator circuits. In this operating condition, the electric meter does normally not require any further power. However, when the electric meter is disconnected from the electricity network, a built-in large capacitor or battery is typically used to power at least a memory in which status data and/or measured data are stored. E.g. such capacitor or battery is also used to power the display for read-out of the stored data. In such electricity meter, the power interface can be used to provide power to assist the capacitor or battery in powering memory circuit and/or display and hereby increase the period where the meter can store and read-out data after disconnection from its primary source of power.

In preferred embodiments, the power interface is arranged to receive an incoming signal and convert energy contained in the incoming signal to electric power for powering the at least one power consuming component of the consumption meter.

In preferred embodiments, the power interface includes a photovoltaic element, such as a solar cell, arranged to receive an optical signal and generate electric power in response. Thereby light, e.g. daylight from the sun and/or light from electrical lighting is utilized to provide power to power consuming components of the meter.

The power interface may include a transducer arranged to receive a signal and generate electric power in response to a signal received, the transducer being one or more of: an inductive transducer, a capacitive transducer, an acoustic transducer, and a vibration transducer.

Alternatively of additionally, the power interface may include an electromagnetic transducer arranged to receive an electromagnetic signal, such as a wireless Radio Frequency signal, and generate electric power in response. Especially, the power interface may include a Radio Frequency Identification (RFID) tag or device arranged to receive the wireless Radio Frequency signal and generate electric power in response.

The at least one power consuming component receiving power from the power interface preferably includes a display, such as an display, for displaying data representing the consumed quantity. The display may be exclusively powered by the power interface, or the display may be powered by the first energy source in case there is no power available from the power interface at when a user wants to read the display.

The at least one power consuming component receiving power from the power interface may include a communication module. Such communication module may include an optical communication interface arranged to receive an incoming optical signal. Such an optical communication interface may be arranged to receive programming data represented in the incoming optical signal and to change programming status according to the received programming data. The optical communication interface may additionally or alternatively be arranged to transmit data, such as data representing the consumed quantity, and/or stored status codes. The communication module may include an interface arranged to transmit the data representing the consumed quantity via at least one of: a wireless Radio Frequency communication, a communication via electric power lines, and a dedicated communication wire. The communication module may be arranged to change its mode of operation if power is available from the power interface, such as increase a rate of transmission of the data representing the consumed quantity. Hereby the communication module is capable of adapting its function to fit the power available from the power interface, thereby decreasing the required power drawn from the first energy source, in periods where the power interface does not deliver any power.

The measurement circuit may be arranged to receive power from the power interface. Especially, the measurement circuit may be arranged to switch to an extended mode of operation if power is available from the power interface. Such extended mode of operation may include performing the physical measurements on the physical entity at an increased rate, e.g. an increased rate of ultrasonic measurements in case of an ultrasonic heat meter so as to enhance measurement precision when extra power is available from the power interface, thus enhancing measurement precision compared to pure operation powered by the first energy source (e.g. battery).

Further, the meter may include an externally accessible power output socket powered by the power interface. Hereby external equipment such as external communication modules and/or external pulse transmitters can be powered by the meter.

The power interface may be arranged to charge a chargeable element, such as a chargeable battery or capacitor. Hereby it is possible to store power from generated from the power interface when it is available. Thus, it becomes possible to power components also in situations where the power interface can not provide the power when it is required, e.g. in the dark if the power interface only includes a solar cell.

As already mentioned, first energy source for powering the measurement circuit and the calculator circuit may be a battery, such as a battery known from existing consumption meters. With the application of the present invention, such battery will have increased durability in the consumption meter. Thus, the lifetime of the battery can be increased, and/or it becomes possible to use a battery with less capacity, e.g. one with a smaller size.

In consumption meters with measurement circuit and calculator circuit powered by a power supply connected to the electric network as the first energy source, e.g. as typical for electric meters, the power interface can still be used to assist such power supply. E.g. by powering the display and/or communication module. E.g. the extra power from the power interface can be used to relax requirement for power capacity in the power supply, and thus this power supply can be dimensioned smaller and less expensive. Further, relaxed requirements on the capacity of power supply means that the meter becomes less vulnerable to magnetic intrusion, because the power supply can be used to solely power the vital measurement and calculator circuits, while the power interface, e.g. including a solar cell, can overtake powering of further components in situations where the power supply has reduced capacity due to magnetic intrusion. The power interface, e.g. a solar cell, may further be used to assist the power supply in powering the measurement and calculator circuits, and thus maintain the vital meter function, in situations where the power supply is heavily impaired, e.g. during magnetic intrusion.

### Brief description of drawings

In the following, the invention will be described in more details by referring to embodiments illustrated in the accompanying drawings, of which
Fig. 1 illustrates a consumption meter embodiment, and
Fig. 2 illustrates another consumption meter embodiment.

### Detailed description of the invention

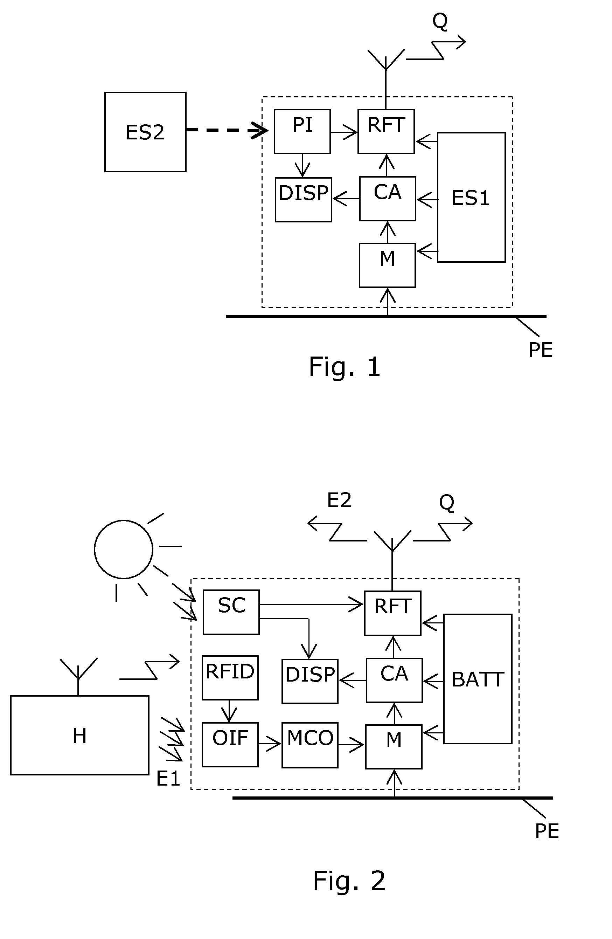

Fig. 1 illustrates a consumption meter (indicated with the dashed line) with a measurement circuit M connected to a physical entity PE. Measurement data related to a consumed energy is applied to a calculator circuit CA that calculates the consumed quantity Q accordingly. This consumed quantity Q is then included in a wireless RF data and transmitted via a radio frequency transmitter RFT. In addition, the consumed quantity Q is applied for read out on a display DISP.

A first energy source ES1, e.g. a battery placed inside a casing of the consumption meter, powers the measurement circuit M and the calculator circuit CA. The display DISP is exclusively power by a power interface (PI) which receives a wireless power signal (dashed arrow) from an external second energy source ES2. Thus, in periods where there is no power available from the power interface PI, it is not possible to have a read out on the display DISP. However, power is saved from the first energy source ES1 compared to meters with a constantly functioning display.

The radio frequency transmitter RFT is powered partly by the first energy source ES1, and partly by the power interface PI. Hereby it is possible to transmit the consumed quantity Q by the radio frequency transmitter RFT, even though power is not immediately available from the power interface PI. However, in case the power interface PI is capable of delivering enough power, the radio frequency transmitter RFT may switch to another mode of operation, e.g. with an increase rate of transmission of the consumed quantity Q. Thus, if the power from the power interface PI is available, then a more power consuming mode of operation can be selected. Hereby the primary energy source ES1, e.g. a battery, is saved by selected only a minimum operation of the radio frequency transmitter RFT in periods without any power available from the power interface PI.

Fig. 2 illustrates another consumption meter embodiment. Here the first energy source is in the form of an internal battery BATT that powers measurement circuit M, calculator circuit CA and a microcontroller MCO controlling the function of the meter (link to battery BATT not shown for clarity reasons). In this embodiment two power interfaces are included: 1) a solar cell arrangement SC for position to catch light, e.g. from the sun or from artificial light sources, and 2) an RFID receiver suited to derive electric power based on a received Radio Frequency (RF) signal at a certain frequency to which the RF ID is tuned.

The solar cell SC converts light to electric power which is used to power a display D and to partly power a radio frequency transmitter RFT, as explained in connection with Fig. 1. By manual reading of the meter using the display DISP, e.g. a Liquid Crystal Display (LCD) type display, it is usually required that there is sufficient light in the room where the display is located in order for a person to read the display. Thus, at the same time there will be light to power the display DISP via the solar cell arrangement SC, and thus under normal conditions, the user will not experience any decrease in the use of the display, even though the display DISP is exclusively powered by a solar cell SC

The RFID receiver is arranged to deliver power to drive an optical interface OIF arranged to receive an optical input signal E1. In the illustrated embodiment, a handheld communication device H is capable of programming the microcontroller MCO by inputting a programming code represented in the optical signal E1. The handheld communication device H is arranged to transmit an RF signal tuned in frequency so as to deliver power to the optical interface OIF via the RFID. Hereby the optical interface OIF does not require any power from the battery BATT to stay in a stand-by mode awaiting an incoming optical signal E1, but the device H sending the optical signal E1 can "wake-up" the optical interface itself.

Further, transmit a code or an encryption code represented in the optical signal E1, and the meter is then arranged to transmit data E2 represented in a wireless RF signal transmitted by the radio frequency transmitter RFT in response to receipt of the optical signal E1. Especially, the data sent E2 can be encrypted or coded with the code or encryption code received optically from the handheld device H. The handheld device H can then receive the RF signal and extract the data E2. Such communication capability can be used in a procedure of registering the consumption meter, e.g. after installation, in a meter reading system for remote wireless RF reading of a group of meters. By responding with an RF signal E2 with encrypted data to an optical input signal E1, it is ensured that no confident data, e.g. ID number, an encryption code used by the meter, or consumption data, could possibly be extracted by an intruding third party, even if the wireless RF signal is received. The communication with the optical interface OIF requires that the handheld device H is present very close to the meter, i.e. at a distance within a few centimetres. E.g. the handheld device H can be operated by the installing person who installs the consumption meter and then performs the registering act using the handheld device H as a final act during the installation visit at the consumer.

To sum up, the invention provides a consumption meter arranged to measure a consumed quantity of a physical entity (PE). The meter includes a measurement circuit (M) and a calculator circuit (CA) arranged to calculate data representing the consumed quantity (Q) based on data from the measurement circuit (M). The measurement circuit (M) and the calculator circuit (CA) are powered via a galvanic connection to a first energy source (ES1, BATT) e.g. an internal battery. The meter further includes a power interface (PI, SC, RFID) arranged to generate electric power to at least one power consuming component (DISP, RFT, OIF) of the consumption meter based on energy received via a wireless connection to a second energy source (ES2, H). E.g. the power interface includes a solar cell to generate power based on light. Other possible power interfaces are arranged to generate power based on incoming signals such as capacitive, inductive, acoustic, vibration, electromagnetic Radio Frequency signals etc. E.g. the at least one power consuming component (DISP, RFT, OIF) powered by the power interface may be a display (DISP), a communication module (RFT), and an optical interface (OIF) of the meter.

Although the present invention has been described in connection with the specified embodiments, it is not intended to be limited to the specific form set forth herein. Rather, the scope of the present invention is limited only by the accompanying claims. In the claims, the term "comprising" or "including" does not exclude the presence of other elements. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A consumption meter arranged to measure a consumed quantity of a physical entity (PE), the meter including
- a measurement circuit (M) arranged to perform a physical measurement on the physical entity (PE) and to generate data according thereto,
- a calculator circuit (CA) arranged to calculate data representing the consumed quantity (Q) based on data from the measurement circuit (M),
wherein the measurement circuit (M) and the calculator circuit (CA) are arranged for receiving power via a galvanic connection to a first energy source (ES1, BATT), and
- a power interface (PI, SC, RFID) arranged to generate electric power to at least one power consuming component (DISP, RFT, OIF) of the consumption meter based on energy received via a wireless connection to a second energy source (ES2, H).

2. Consumption meter according to claim 1, wherein the power interface (PI, SC, RFID) is arranged to receive an incoming signal and convert energy contained in the incoming signal to electric power for powering the at least one power consuming component (DISP, RFT, OIF) of the consumption meter.

3. Consumption meter according to claim 1 or 2, wherein the power interface (PI) includes a photovoltaic element (SC), such as a solar cell, arranged to receive an optical signal and generate electric power in response.

4. Consumption meter according to any of the preceding claims, wherein the power interface (PI) includes an inductive transducer arranged to receive an inductive signal and generate electric power in response.

5. Consumption meter according to any of the preceding claims, wherein the power interface (PI) includes a capacitive transducer arranged to receive a capacitive signal and generate electric power in response.

6. Consumption meter according to any of the preceding claims, wherein the power interface (PI) includes an electromagnetic transducer arranged to receive an electromagnetic signal and generate electric power in response.

7. Consumption meter according to claim 6, wherein the power interface (PI) is arranged to receive a wireless Radio Frequency signal, such as including an RF ID tag (RFID), and generate electric power in response.

8. Consumption meter according to any of the preceding claims, wherein the power interface (PI) includes an acoustic transducer or a vibration transducer arranged to receive an acoustic signal and generate electric power in response.

9. Consumption meter according to any of the preceding claims, wherein the at least one power consuming component receiving power from the power interface (PI) includes a display (DISP), such as an LCD display, for displaying data representing the consumed quantity (Q).

10. Consumption meter according to claim 9, wherein the display (DIPS) is exclusively powered by the power interface (PI, SC).

11. Consumption meter according to any of the preceding claims, wherein the at least one power consuming component receiving power from the power interface (PI, SC, RFID) includes a communication module (RFT, OIF).

12. Consumption meter according to claim 11, wherein the communication module includes an optical communication interface (OIF) arranged to receive an incoming optical signal (E1), such as programming data represented in the incoming optical signal (E1).

13. Consumption meter according to claim 12, wherein the optical communication interface (OIF) is arranged to transmit data, such as data representing the consumed quantity (Q).

14. Consumption meter according to any of claims 11-13, wherein the communication module includes an interface (RFT) arranged to transmit the data representing the consumed quantity (Q) via at least one of: a wireless Radio Frequency communication, a communication via electric power lines, and a dedicated communication wire.

15. Consumption meter according to claim 14, wherein the communication module (RFT) is arranged to change its mode of operation if power is available from the power interface (PI, SC), such as increase a rate of transmission of the data representing the consumed quantity (Q).

16. Consumption meter according to any of the preceding claims, wherein the measurement circuit (M) is arranged to receive power from the power interface (PI).

17. Consumption meter according to claim 16, wherein the measurement circuit (M) is arranged to switch to an extended mode of operation, such as an extended mode of operation including performing the physical measurements on the physical entity (PE) at an increased rate, if power is available from the power interface (PI).

18. Consumption meter according to any of the preceding claims, wherein the power interface is arranged to charge a chargeable element, such as a chargeable battery.

19. Consumption meter according to any of the preceding claims, wherein the first energy source (ES1) for powering the measurement circuit (M) and the calculator circuit (CA) is a battery (BATT).
